# EUROPEAN PATENT APPLICATION

(11) **EP 3 553 247 A1**
(43) Date of publication of application: **16.10.2019**
(21) Application number: 18275164.4
(22) Date of filing: 23.10.2018
(51) Int. Cl.: E04D 1/34, F24S 25/613

(54) **TILE FIXING DEVICE, TILE MOUNTING METHOD AND ROOF**

(30) Priority: 13.04.2018 CN 201810333939
(71) Applicant: Beijing Hanergy Solar Power Investment Co., Ltd., 101499 Beijing (CN)
(72) Inventor: ZHANG, Jikai, Beijing 101499, (CN); ZHU, Wei, Beijing 101499, (CN)
(74) Representative: Potter Clarkson

(57) **Abstract**

Provided are a tile fixing device, a tile mounting method and a roof which relate to the technical field of photovoltaic power generation, reduce the pressure that the tile hook exerts on the tile batten and thus prolong the service life of the tile batten, the tile fixing device includes a tile hook which is provided thereon with a fixing piece configured to cooperate with the mounting hole of the tile and further a positioning structure configured to limit the tile batten. The tile mounting method uses the above tile fixing device to place tiles. The tile fixing device, the tile mounting method and the roof provided herein are applied to photovoltaic power generation.

## Description

### Technical Field

The present disclosure relates to the technical field of building tiles and particularly to a tile fixing device, a tile mounting method and a roof.

### Background Art

In the prior art, people have developed a solar power generation tile by combining solar power generation technology and traditional buildings, such tile can not only be used as conventional tile in house construction, but also be used as a solar power converter for photovoltaic power generation. Solar power generation tiles are placed by the traditional method of placing fired roofing tiles, cement tiles, etc., but such method has many defects.

### Summary

The embodiments of the present disclosure provide the following technical solutions:
A tile fixing device includes a tile hook which is provided thereon with a fixing piece configured to cooperate with the mounting hole of the tile, and is provided thereon with a positioning structure configured to limit a tile batten.

Further, a limiting face of the positioning structure that limits the tile batten is an arc-shaped limiting face.

Further, the fixing piece and the tile batten are located at two sides of the positioning structure, and the arc-shaped limiting face is in external connection with the tile batten.

Further, the positioning structure comprises a first linear positioning section, a second linear positioning section and an arc-shaped positioning section which connects the first linear positioning section and the second linear positioning section, and the first linear positioning section is connected to one end of the tile hook.

Further, an angle between a linear direction of the first linear positioning section and a linear direction of the second linear positioning section is acute, the arc-shaped positioning section is located within the angle between the linear direction of the first linear positioning section and the linear direction of the second linear positioning section.

Further, a straight line in a linear direction of the first linear position section and a straight line in a linear direction of the second linear position section are respectively tangent to an arc-shaped face of the arc-shaped positioning section.

Further, the tile hook comprises a tile fixing section, a tile batten positioning section and a tile batten lap-joint section which is configured to be lap-jointed on the tile batten, the fixing piece is provided on the tile fixing section, the tile fixing section is connected with the tile batten lap-joint section by the tile batten positioning section, the tile batten positioning section is provided with a positioning hole which is configured to position the tile batten, and the first linear positioning section is connected with the tile fixing section.

Further, the positioning hole is located at a center of the tile batten positioning section.

Further, the tile fixing section is in a linear structure, and the linear direction of the first linear positioning section is perpendicular to a linear direction of the tile fixing section.

Further, the fixing piece is a clinch nut, a snap-fit piece or an articulating piece.

The embodiments of the present disclosure further provide a tile mounting method, which is applied to the tile fixing device described in the above technical solution, and includes:
providing a tile on which a mounting hole is provided;
making a first connecting piece pass through the mounting hole and fixing the connecting piece by the fixing piece included in the tile fixing device, such that the tile hook included in the tile fixing device is fixed on the tile; and
the tile hook included in the tile fixing device is lap-jointed (overlapped) on the tile batten such that the limiting face of the positioning structure included in the tile fixing device that limits the tile batten is in contact with the tile batten.

Further, when the tile hook comprises a tile fixing section, a tile batten positioning section and a tile batten lap-joint section which is configured to be lap-jointed on the tile batten, after making the tile hook comprised by the tile fixing device lap-jointed on the tile batten, the tile mounting method further comprises:
making a second connecting piece pass through a positioning hole such that the tile batten positioning section is attached to the tile batten .

Further, a gap is formed between the first connecting piece and the tile batten.

The embodiments of the present disclosure further provide a roof which includes a tile and the tile fixing device described in the above technical solution, in the mounting hole of the tile is provided with a first connecting piece which cooperates with the fixing piece included in the tile fixing device, the tile hook included in the tile fixing device is lap-jointed on the tile batten, the limiting face of the positioning structure included in the tile fixing device that limits the tile batten is in contact with the tile batten.

Further, tile hook comprises a tile fixing section, a tile batten positioning section, and a tile batten lap-joint section which is configured to be lap-jointed on the tile batten, wherein a second connecting piece passes through the positioning hole of the tile batten positioning section to position the tile batten positioning section on the tile batten, and a gap is formed between the first connecting piece and the tile batten.

### Brief Description of Drawings

The figures herein are illustrated to provide further understanding of the present disclosure and constitute a part of the present disclosure. The exemplary embodiments of the present disclosure and their illustration are configured to explain the present disclosure, but do not make any inappropriate definition of the present disclosure. In the figures:
Fig. 1 is a structural schematic diagram of a tile fixing device provided by an embodiment of the present disclosure;
Fig. 2 is a schematic diagram of a tile batten positioning section in an embodiment of the present disclosure;
Fig. 3 is a partial schematic diagram of a roof provided by an embodiment of the present disclosure;
Fig. 4 is a flow chart of a tile mounting method provided by an embodiment of the present disclosure.

Reference signs:

| | |
|---|---|
| 1-tile hook | 11-tile fixing section; |
| 12-tile batten positioning section | 13-tile batten lap-joint section; |
| 101-fixing piece | 102-positioning hole; |
| 2-positioning structure | 20-arc-shaped positioning section; |
| 21-first linear positioning section | 22-second linear positioning section; |
| 3-tile batten | 4-tile. |

### Detailed Description of Embodiments

Below, the technical solutions provided in the embodiments of the present disclosure will be clearly and completely described with reference to the drawings associated with the embodiments of the present disclosure. Apparently, the embodiments described below are merely some but not all of the embodiments of the present disclosure. All the other embodiments obtained by those ordinarily skilled in the art based on the embodiments provided in the present disclosure without paying creative efforts shall fall within the scope of protection of the present disclosure.

It is to be noted that in the description of the present disclosure, orientation or positional relations indicated by terms such as "center", "upper", "lower", "left", "right", "vertical", "horizontal", "inner" and "outer" are the orientation or positional relations shown based on the figures, only for facilitating and simplifying description of the present disclosure, rather than indicating or implying that the referred devices or elements must be in a particular orientation or constructed or operated in the particular orientation, and therefore they should not be construed as limiting the present disclosure. In addition, terms like "first", "second" and "third" are merely used for descriptive purpose, but should not be construed as indicating or implying relative importance.

It should also be noted that, in the present disclosure, terms like "mount", "coupled" and "connected" should be interpreted in a broad sense, unless otherwise explicitly specified and defined. For example, a connection could be fixed, detachable, or integrated, or it could be mechanical or electrical, or it could be direct or done via an intermediate medium, or it could be internal communication between two elements. Those ordinarily skilled in the art can understand the specific meanings of the above terms in the present disclosure according to specific circumstances.

Due to a smaller contact area between the tile hook and the tile batten in the prior art, the tile hook exerts a large pressure on the tile batten under the heavy weight load of solar power generation tiles, in this case, structures of a less strong tile batten are liable to damage, which greatly reduces the service life of the tile batten.

The purpose of the present disclosure is to provide a tile fixing device, a tile mounting method and a roof to reduce the pressure that tile hooks exert on tile battens, so as to extend the service life of tile battens.

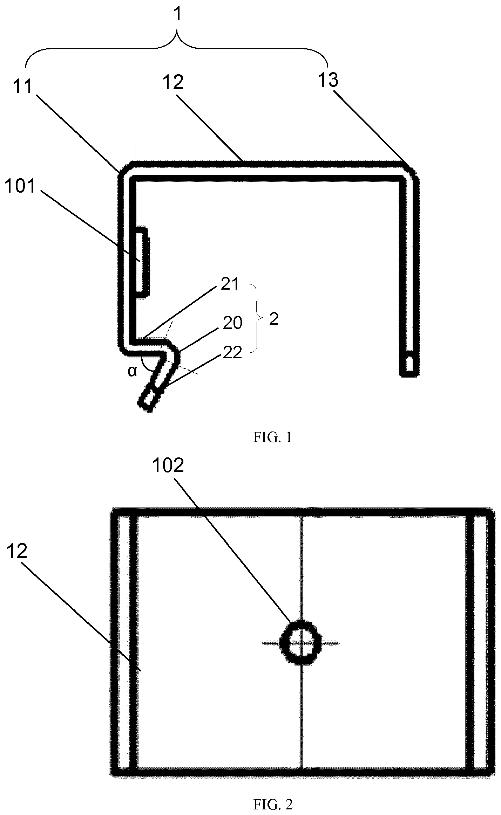

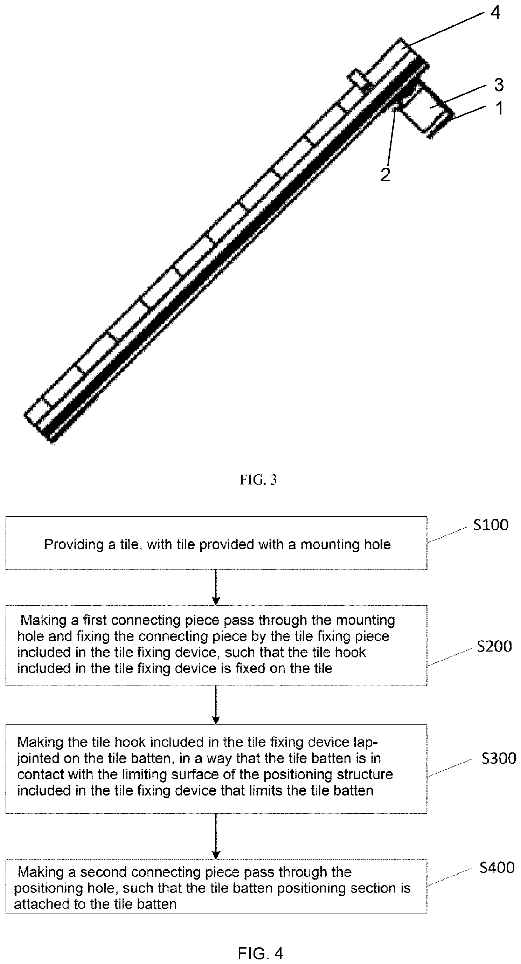

Referring to Fig. 1 and Fig. 3, the tile fixing device provided by the embodiments of the present disclosure includes a tile hook 1, on the tile hook 1 is provided a fixing piece 101 which is configured to cooperate with the mounting hole defined on the tile 4, on the tile hook 1 is also provided a positioning structure 2 which is configured to limit the tile batten 3. The tile fixing device in the above provided by the embodiments of the present disclosure may be used to fix various tiles, e.g. frequently used fired roofing tiles, cement tiles and functional tiles like solar power generation tile. Below, how a tile 4 is mounted with the tile fixing device provided by the embodiments of the present disclosure will be detailed with reference to Figs. 1, 3 and 4.

Step 1, which is to provide a tile 4; the solar power generation tile 4 in the present embodiment is taken as an example; a mounting hole is provided on the tile.

Step 2, which is to make a first connecting piece pass through the mounting hole and to fix the first connecting piece by the fixing piece 101 included in the tile fixing device, such that the tile hook 1 included in the tile fixing device is fixed on the solar power generation tile 4; it is understood that the tile hook 1 is generally provided with a via (via hole) which cooperates with the mounting hole, so that the first connecting piece may pass through the mounting hole and the via to connect the tile hook 1 with the solar power generation tile, therefore, the first connecting piece in the embodiments of the present disclosure is fixed by the fixing piece 101 after passing through the mounting hole and the via, so as to connect the tile hook 1 with the solar power generation tile.

Step 3, which is to make the tile hook 1 included in the tile fixing device lap-jointed on the tile batten 3, such that the limiting face of the positioning structure 2 included in the tile fixing device that limits the tile batten 3 is in contact with the tile batten 3, so as to limit the tile batten 3.

As can be known from the specific structure of the tile fixing device and the tile mounting process provided by the embodiments of the present disclosure, the tile hook 1 is further provided with a positioning structure 2 which is configured to limit the tile batten 3, so that when the tile hook 1 is fixed on the tile 4, the tile batten 3 that is lap-jointed with the tile hook 1 is limited by the limiting face of the positioning structure 2, in a way that the positioning structure 2 supports the tile batten 3 in a certain way, in this way, the pressure that the tile hook 1 exerts on the tile batten 3 is relieved and thus the tile batten 3 may have a longer service life.

Optionally, as shown in Fig. 1, in the embodiments of the present disclosure, the limiting face of the positioning structure 2 that limits the tile batten 3 is arc-shaped, such arc-shaped limiting face can reduce the wear of the tile batten 3 caused by the positioning structure 2 when the tile batten 3 is limited by the limiting face of the positioning structure 2; in addition, the arc-shaped limiting face of the positioning structure 2 can reduce the resistance to the tile batten 3 since relative displacement occurs between the arc-shaped limiting face of the positioning structure 2 and the tile batten 3, therefore, when the tile 4 is mounted or removed or when it is shaking, and the tile 4 causes relative displacement between the positioning structure 2 provided on the tile hook 1 and the tile batten 3, the arc-shaped limiting face of the positioning structure 2 can reduce the wear of the tile batten 3 caused by the limiting face of the positioning structure 2 during the relative displacement, meanwhile this can also reduce unnecessary wear of the tile batten 3 caused by the limiting face of the positioning structure 2 in mounting and removing the tile 4, and thus makes it easy to mount and remove the tile 4 such as solar power generation tile.

Specifically, as shown in Fig. 1 and Fig. 3, in the embodiments of the present disclosure, the fixing piece 101 and the tile batten 3 are located at two sides of the positioning structure 2, and the arc-shaped limiting face is in external connection with the tile batten 3 (the tile batten 3 is connected with and attached to the arc-shaped limiting face), so that the tile batten 3 would be in external connection with the arc-shaped limiting face of the positioning structure 2 when the tile 4 is mounted, in addition, since the fixing piece 101 and the tile batten 3 are located at two sides of the positioning structure 2, and the arc-shaped face is in external connection with the tile batten 3, the tile batten 3 and the fixing piece 101 that fixes the first connecting piece would be bounded by the arc-shaped limiting face and facing towards two opposite directions after the tile 4 is mounted, in this case, the tile batten 3 is away from the fixing piece 101 that fixes the first connecting piece, so that the tile batten 3 would not be in contact with the first connecting piece and the fixing piece 101, this thus reduces the wear of the tile batten 3 caused by the first connecting piece and the fixing piece 101.

It should be noted that in the embodiments of the present disclosure, the fixing piece 101 may be of various types, it may be a threaded piece, e.g. clinch nut, or a snap-fit piece or articulating piece, and certainly the fixing piece 101 may have other forms.

Optionally, the fixing piece 101 is in detachable connection with the mounting hole defined on the tile.

The mounting hole may have various sectional shapes, e.g. rectangular, circular, oval, etc., optionally, circular.

When the fixing piece 101 is in threaded connection with the first connecting piece, the fixing piece 101 is a threaded piece like clinch nut and the first connecting piece used in the tile mounting is a bolt.

When the fixing piece 101 is connected with the first connecting piece by snap-fitting, the fixing piece 101 and the first connecting piece used in the tile mounting form a snap-fitting (buckle) structure, and certainly, they may form other snap-fitting structures. Taking the snap-fitting structure as an example, the fixing piece 101 is a fastening piece which is normally annular; and the first connecting piece is a positioning piece which is normally columnar.

When the fixing piece 101 is in hinge connection with the first connecting piece, the fixing piece 101 is normally a hinge piece like a hinge, and the first connecting piece has a columnar structure which passes through the mounting hole and is in pin connection with the fixing piece 101.

As an implementable embodiment, as shown in Fig. 1 and Fig. 3, in the embodiments of the present disclosure, the positioning structure 2 includes a first linear positioning section 21, a second linear positioning section 22 and an arc-shaped positioning section 20 connecting the first linear positioning section 21 and the second linear positioning section 22; the first linear positioning section 21 is connected on one end of the tile hook 1. The specific shape formed by the first linear positioning section 21, the second linear positioning section 22 and the arc-shaped positioning section 20 depends on the circumstances but should ensure that the positioning structure 2 sufficiently limits the tile batten 3 after the tile 4 is mounted.

As shown in Fig. 1 and Fig. 3, in the embodiments of the present disclosure, the straight line on the linear direction of the first linear positioning section 21 and the straight line on the linear direction of the second linear positioning section 22 are both tangent to the arc-shaped face of the arc-shaped positioning section 20, for the purpose of a less resistance to the relative displacement between the limiting face of the positioning structure 2 and the tile batten 3 when relative displacement occurs between the limiting face of the positioning structure 2 and the tile batten 3, in this case, the limiting face formed by the first linear positioning section 21, the second linear positioning section 22 and the arc-shaped positioning section 20 is smooth, so as to further reduce the resistance to the relative displacement between the limiting face of the positioning structure 2 and the tile batten 3 when the tile 4 is mounted, removed or when it is shaking, and thus further reduce the wear of the tile batten 3 caused by the positioning structure 2.

Further, as shown in Fig. 1 and Fig. 3, to ensure that the tile batten 3 regarding to the fixing piece 101 and the first connecting piece are independent from each other (namely, a gap is formed between the tile batten 3 and the fixing piece 101 as well as the first connecting piece), in the embodiments of the present disclosure, the angle α included (formed) between the linear direction of the first linear positioning section 21 and the linear direction of the second linear positioning section 22 is acute, the arc-shaped positioning section 20 is located within the angle included between the linear direction of the first linear positioning section 21 and the linear direction of the second linear positioning section 22, the angle may be sized according to the circumstances, e.g. 30°-70°, sure, it may also have other sizes.

When the angle α included between the linear direction of the first linear positioning section 21 and the linear direction of the second linear positioning section 22 is acute, the arc-shaped positioning section 20 can protrude away from the fixing piece 101 in the most possible way, so that there would be sufficient space between the tile batten 3 and the fixing piece 101 and the first connecting piece after the tile 4 is mounted, this not only protects the tile batten 3 from being worn by the fixing piece 101 and the first connecting piece, but also, from another point of view, provides more fixing room for the fixing piece 101 to fix the first connecting piece, so that the connection would be more secure (robust) between the tile hook 1 and the tile 4.

In the prior art, the mounting hole defined on the tile and the via defined on the tile hook both have a diameter larger than the diameter of the first connecting piece, since when a single solar power generation tile is to be fixed, a single batten is connected with at least two tile hooks, in the case where a single solar power generation tile is connected with two tile hooks, the line between the geometrical centers of the two tile hooks will be inclined due to the gap between the first connecting piece and the mounting hole defined on the tile and the via defined on the tile hook, as a result, the solar power generation tile will be higher on one side and lower on the other side after it is mounted. In addition, various mounting errors may occur when mounting an existing solar power generation tile, which may also lead to inclined power generation tiles in the same row and may even compromise the overall construction quality when serious. In view of this, as shown in Figs. 1, 2 and 3, in the embodiments of the present disclosure, the tile hook 1 includes a tile fixing section 11, a tile batten positioning section 12 and a tile batten lap-joint section 13 which is configured to be lap-jointed on the tile batten 3, the fixing piece 101 is provided on the tile fixing section 11, the tile fixing section 11 is connected with the tile lap-joint section 13 by the tile batten positioning section 12; the tile batten positioning section 12 is provided with a positioning hole 102 which is configured to position the tile batten 3, the first linear positioning section 21 is connected with the tile fixing section 11. It is understood that the tile fixing section 11 is configured to be fixed with the tile 4 and is provided thereon with a via cooperating with the mounting hole.

When mounting a tile 4, a second connecting piece, e.g. a fastening screw, may be used to fasten the first linear positioning section 21 to the tile batten 3 in the last step, in a way that the tile batten positioning section abuts against the tile batten 3, this allows accurate positioning of the tile batten 3, and solves the problem that the tile 4 is higher on one side and lower on the other side when the tile 4 is mounted or as a result of traditional tile hanging method.

The positioning hole 102 may have various sectional shapes, e.g. rectangular, circular, oval, optionally, the positioning hole 102 has a circular section.

There may be one, two, three or more positioning holes 102, optionally, there is one positioning hole 102.

Optionally, the positioning hole 102 is located at the center of the tile batten positioning section 12; by locating the positioning hole 102 at the center of the tile batten positioning section 12, it is ensured that the tile batten 3 is accurately positioned and the tile batten 3 may be under more uniform force, this solves the problem that the tile 4 is higher on one side and lower on the other side when the tile 4 is mounted or as a result of traditional tile hanging method.

Optionally, as shown in Fig. 1, in the embodiments of the present disclosure, the tile fixing section 11 has a linear structure, the linear direction of the first linear positioning section 21 is perpendicular to the linear direction of the tile fixing section 11, in this case, the arc-shaped positioning section 20 connected with the first linear positioning section 21 is farthest from the tile fixing section 11, so as to prevent the tile batten 3 from contacting with the positioning piece and the first connecting piece as much as possible.

Optionally, as shown in Fig. 1 and Fig. 3, the tile batten 3 has a bar-like structure extending along the roof, optionally, the tile batten 3 has a rectangular section; compared with the length of the tile fixing section 11, the face of the tile batten 3 that is in contact with the arc-shaped limiting face has an overall width larger than the length of the tile fixing section 11, as the linear direction of the first linear positioning section 21 is perpendicular to the linear direction of the tile fixing section 11, the arc-shaped positioning section 20 is exactly located within the contact face of the tile batten 3 when the length of the tile fixing section 11 is smaller than the overall width of the face of the tile batten 3 that is in contact with the arc-shaped limiting face, in this way, it is ensured in the most possible way that the arc-shaped positioning section 20 is in full contact with the tile batten 3, and that the arc-shaped positioning section 20 keeps in contact with the tile batten 3 when relative displacement occurs between the arc-shaped limiting face of the positioning structure 2 and the tile batten 3, therefore, the pressure that the tile hook 1 exerts on the tile batten 3 is relieved in the most possible way, and thus the tile batten 3 may have longer service life.

Optionally, the length of the tile fixing section 11 is larger than half of the overall width of the face of the tile batten 3 that is in contact with the arc-shaped limiting face, and smaller than the overall width of the face of the tile batten 3 that is in contact with the arc-shaped limiting face.

It should be noted that in the embodiments of the present disclosure, the shape formed by the tile fixing section 11, the tile batten positioning section 12 and the tile batten lap-joint section 13 depends on how the tile fixing section 11, the tile batten positioning section 12 and the tile batten lap-joint section 13 actually run, generally, the tile hook is C-shaped or U-shaped. In addition, in the embodiments of the present disclosure, "linear" means it may be straight in ideal condition, for example, the first linear positioning section, the second linear positioning section and the tile fixing section of the rectangular bar-like structure may be straight in ideal condition, expect that the angle included between the straight lines of the first linear positioning section and the second linear positioning section in ideal condition is acute, and the straight lines of the first linear positioning section and the tile fixing section in ideal condition are perpendicular to each other.

As shown in Figs. 1-4, the embodiments of the present disclosure further provide a tile mounting method, which is applied to the tile fixing device provided in the above embodiment and includes:
Step S100, which is to provide a tile 4; in an embodiment, the tile 4 may be a solar power generation tile which is provided with a mounting hole;
Step S200, which is to make a first connecting piece pass through the mounting hole and fix the first connecting piece by the fixing piece 101 included in the tile fixing device, such that the tile hook 1 included in the tile fixing device is fixed on the tile 4;
Step S300, which is to make the tile hook 1 included in the tile fixing device lap-jointed on the tile batten 3, such that the limiting surface of the positioning structure 2 included in the tile fixing device that limits the tile batten 3 is in contact with the tile batten 3.

Compared with the prior art, the tile mounting method provided by the embodiments of the present disclosure provides the same beneficial effects as the tile fixing device provided in the above embodiment and thus they will not be repeated here.

Optionally, in the embodiments of the present disclosure, after a solar power generation tile is mounted, a gap is formed between the first connecting piece and the tile batten 3 to prevent the first connecting piece from scratching the tile batten 3.

Specifically, as shown in Fig. 1 and Fig. 4, the tile hook 1 includes a tile fixing section 11, a tile batten 3 positioning section 12 and a tile batten lap-joint section 13 which is configured to be lap-jointed on the tile batten 3, after the tile hook 1 included in the tile fixing device is lap-jointed on the tile batten, the tile mounting method provided by the embodiments of the present disclosure further includes:
Step S400, which is to make a second connecting piece pass through the positioning hole 102, such that the tile batten positioning section 12 is attached to the tile batten 3.

In another aspect, the embodiments of the present disclosure further provide a roof which includes a tile and at least one tile fixing device provided in the above embodiments, in the mounting hole of the tile is provided a first connecting piece which cooperates with the fixing piece 101 included in the tile fixing device, the tile hook 1 included in the tile fixing device is lap-jointed on the tile batten 3, the limiting surface of the positioning structure 2 included in the tile fixing device that limits the tile batten 3 is in contact with the tile batten 3.

Compared with the prior art, the roof provided by the embodiments of the present disclosure provides the same beneficial effects as the tile fixing device provided in the above embodiment and thus they will not be repeated here.

Specifically, as shown in Figs. 1-3, when the tile hook 1 includes a tile fixing section 11, a tile batten positioning section 12, and a tile batten lap-joint section 13 which is configured to be lap-jointed on the tile batten 3, the second connecting piece passes through the positioning hole 102 to position the tile batten positioning section 12 on the tile batten, a gap is formed between the first connecting piece and the tile batten 3 to prevent the first connecting piece from scratching the tile batten 3.

In the above description of embodiments, the specific features, structures, materials or characteristics may be combined in any appropriate way in any one or more embodiments or examples.

The above description only shows the specific embodiments of the present disclosure, but the scope of protection of the present disclosure is not limited thereto. Within the technical scope disclosed by the present disclosure, variations or replacements will readily occur to any one skilled in the present technical field and will be encompassed by the scope of protection of the present disclosure. Therefore, the scope of protection of the present disclosure is subject to that defined by the claims.

### Industrial applicability

The embodiments of the present disclosure provide a tile fixing device which relieves the pressure that the tile hook exerts on the tile batten and thus prolongs the service life of the tile batten by limiting the tile batten on which the tile hook is lap-jointed by the limiting face of the positioning structure in a way that the positioning structure supports the tile batten in a certain way.

## Claims

1. A tile fixing device, **characterized by** comprising a tile hook (1), wherein the tile hook is provided thereon with a fixing piece configured to cooperate with a mounting hole of a tile (4), and the tile hook (1) is provided thereon with a positioning structure (2) configured to limit a tile batten (3).

2. The tile fixing device according to claim 1, **characterized in that** a limiting face of the positioning structure (2) that limits the tile batten (3) is an arc-shaped limiting face.

3. The tile fixing device according to claim 2, **characterized in that** the fixing piece (101) and the tile batten (3) are respectively located at two sides of the positioning structure (2), and the arc-shaped limiting face is in external connection with the tile batten (3).

4. The tile fixing device according to any one of claims 1-3, **characterized in that** the positioning structure (2) comprises a first linear positioning section (21), a second linear positioning section (22) and an arc-shaped positioning section (20) connecting the first linear positioning section (21) and the second linear positioning section (22), and the first linear positioning section (21) is connected to one end of the tile hook (1).

5. The tile fixing device according to claim 4, **characterized in that** an angle between a linear direction of the first linear positioning section (21) and a linear direction of the second linear positioning section (22) is acute, the arc-shaped positioning section (20) is located within the angle between the linear direction of the first linear positioning section (21) and the linear direction of the second linear positioning section (22).

6. The tile fixing device according to any one of claims 4-5, **characterized in that** a straight line in a linear direction of the first linear position section (21) and a straight line in a linear direction of the second linear position section (22) are respectively tangent to an arc-shaped face of the arc-shaped positioning section (20).

7. The tile fixing device according to any one of claims 4-6, **characterized in that** the tile hook (1) comprises a tile fixing section (11), a tile batten positioning section (12) and a tile batten lap-joint section (13) which is configured to be lap-jointed on the tile batten (3), the fixing piece (101) is provided on the tile fixing section (11), the tile fixing section (11) is connected with the tile batten lap-joint section (13) by the tile batten positioning section (12), the tile batten positioning section (12) is provided with a positioning hole (102) configured to position the tile batten (3), and the first linear positioning section (21) is connected with the tile fixing section (11).

8. The tile fixing device according to claim 7, **characterized in that** the positioning hole (102) is located at a center of the tile batten positioning section (12).

9. The tile fixing device according to any one of claims 7-8, **characterized in that** the tile fixing section (11) is in a linear structure, and the linear direction of the first linear positioning section (21) is perpendicular to a linear direction of the tile fixing section (11).

10. The tile fixing device according to any one of claims 1-9, **characterized in that** the fixing piece (101) is a clinch nut, a snap-fit piece or an articulating piece.

11. A tile mounting method, **characterized by** comprising:
providing a tile (4), wherein the tile (4) is provided with a mounting hole;
providing a tile fixing device, wherein the tile fixing device comprises a tile hook (1) which is provided thereon with a fixing piece (101) and further a positioning structure (2);
making a first connecting piece pass through the mounting hole and fixing the first connecting piece by the fixing piece (101) of the tile hook (1), such that the tile hook (1) is fixed on the tile (4); and
making the tile hook (1) lap-jointed on the tile batten (3), such that a limiting surface of the positioning structure (2) that limits the tile batten (3) is in contact with the tile batten (3).

12. The tile mounting method according to claim 11, **characterized by** further comprising:
making a second connecting piece pass through a positioning hole (102) such that a tile batten positioning section (12) is attached to the tile batten (3),
wherein the tile hook (1) comprises a tile fixing section (11), the tile batten positioning section (12) and a tile batten lap-joint section (13) which is configured to be lap-jointed on the tile batten (3), the fixing piece (101) is provided on the tile fixing section (11), and the tile batten positioning section (12) is provided with the positioning hole (102).

13. The tile mounting method according to any one of claims 11-12, **characterized in that** a gap is formed between the first connecting piece and the tile batten (3).

14. A roof, **characterized in that** the roof comprises a tile (4) and at least one tile fixing device according to any one of claims 1-10, wherein the tile (4) and the tile fixing device are connected together by the mounting hole of the tile (4), the fixing piece (101) of the tile fixing device and a first connecting piece cooperating with the mounting hole and the fixing piece (101), the tile hook (1) comprised by the tile fixing device is lap-jointed on the tile batten (3), and a limiting surface of the positioning structure (2) comprised by the tile fixing device that limits the tile batten (3) is in contact with the tile batten (3).

15. The roof according to claim 14, **characterized in that** the tile hook (1) comprises a tile fixing section (11), a tile batten positioning section (12), and a tile batten lap-joint section (13) which is configured to be lap-jointed on the tile batten (3), wherein a second connecting piece passes through the positioning hole (102) of the tile batten positioning section (12) to position the tile batten positioning section (12) on the tile batten (3), and preferably a gap is formed between the first connecting piece and the tile batten (3) .
